# EUROPÄISCHE PATENTSCHRIFT

(11) **EP 0 628 501 B1**
(45) Veröffentlichungstag und Bekanntmachung des Hinweises auf die Patenterteilung: **11.12.1996**
(21) Anmeldenummer: 94104754.0
(22) Anmeldetag: 25.03.1994
(51) Int. Cl.: B65G 19/02, B65G 47/61

(54) **Förderer, insbesondere Stetigförderer für Einzelbügel**
Conveyor, especially continuous conveyor for single hangers
Transporteur, notamment transporteur en continu pour cintres individuels

(30) Priorität: 09.06.1993 DE 4319164
(43) Veröffentlichungstag der Anmeldung: 14.12.1994
(73) Patentinhaber: DÜRKOPP ADLER AKTIENGESELLSCHAFT, D-33719 Bielefeld (DE)
(72) Erfinder: Schilling, Gerhard, Dipl.-Ing., D-33604 Bielefeld (DE); Schneuing, Ralf, Dipl.-Ing., D-33649 Bielefeld (DE); Janzen, Paul, Dipl.-Ing., D-33609 Bielefeld (DE)
(74) Vertreter: Rehmann, Klaus-Thorsten, Dipl.-Ing.

(56) Entgegenhaltungen:
- EP-A- 0 416 337
- DE-A- 2 121 087
- DE-U- 8 809 769
- DE-U- 9 002 594
- US-A- 1 639 758

## Beschreibung

Die Erfindung betrifft einen Förderer, insbesondere einen Stetigförderer für Einzelbügel nach dem Oberbegriff des Anspruchs 1.

Zum Fördern von auf Kleiderbügeln hängenden Kleidungsstücken sind unterschiedliche Arten von Förderern bekannt. Beispielsweise kann der Bügelhaken in eine drehbar gelagerte Förderschnecke eingehängt werden, und durch die Drehung der Förderschnecke wird ihm eine Transportbewegung in horizontaler Richtung erteilt (DE-OS 25 06 587). Eine automatische Aufgabe der Bügelhaken auf solch einen Spindelförderer ist nicht reproduzierbar, weil nicht vorhergesagt werden kann, welcher Gewindegang der Schnecke den Bügelhaken erfaßt und transportiert.

Zum Transport von auf Bügeln hängenden Kleidungsstücken in vertikaler Richtung ist es aus der DE-PS 22 63 330 bekannt, eine vertikal umlaufende Förderkette seitlich mit senkrecht zur Förderrichtung stehenden Mitnehmern zu versehen, auf die der Haken des Kleiderbügels eingehängt wird. Hierdurch kann beispielsweise ein Transport über mehrere Stockwerke eines Gebäudes erfolgen.

Die DE-PS 38 07 280 offenbart eine Entladevorrichtung für Tragbügel-Förderwagen, bei der die Bügelhaken einzeln von einem von einem umlaufenden, mit Mitnehmern versehenen Förderer, der oberhalb der Bügelhaken angeordnet ist, entlang einer Gleitstange geschoben werden. Dabei ergreift der Mitnehmer des Förderers den Bügelhaken von oben. Die Führung des Bügelhakens erfolgt durch die ihn tragende Gleitstange.

Ein gattungsgemäßer Förderer ist aus der DE-U-8 809 769 bekannt.

Der Erfindung liegt die Aufgabe zugrunde, einen Förderer, insbesondere einen Stetigförderer für Einzelbügel zu schaffen, der einfach aufgebaut ist, der eine platzsparende Anordnung gewährleistet und der eine sichere Führung der Kleiderbügel bzw. Kleiderbügelhaken gewährleistet.

Die Lösung der Aufgabe erfolgt durch die kennzeichnenden Merkmale des Anspruchs 1.

Vorteilhafte Weiterbildungen der Erfindung sind den Unteransprüchen entnehmbar.

Durch die Schrägstellung der Kette des Förderers verläuft diese parallel zu der Schräge eines Kleiderbügelhakens, so daß eine Berührung des Förderers mit dem auf dem Bügel hängenden Kleidungsstück auch dann sicher ausgeschlossen werden kann, wenn der Bügelhaken sehr kurz ausgebildet ist.

Durch den Abstand der Mitnehmer sind die Toleranzen des Förderers definiert, wodurch dieser sich besonders als Übergabeförderer von einem Förderkreis in einen anderen eignet.

Durch die außermittige Anordnung der Mitnehmer an der Kette stellt sich der Bügel beim Transport quer zur Transportrichtung, so daß eine wesentlich verbesserte Führung erfolgt.

Dadurch, daß die Kette in dem Profil selbst geführt und umgelenkt wird, ist es möglich, den Teilkreisdurchmesser der Umlenkung unter den Mindestteilkreisdurchmesser für entsprechend vorzusehende Kettenräder zu senken. Dadurch wird die Bauhöhe so weit reduziert, daß der Förderer quasi innerhalb des durch den Bügelhaken gebildeten Raumes angeordnet werden kann.

Durch die Abschrägung des Profils an seinem vorderen Ende in Verbindung mit dem an dieser Stelle bogenförmigen Transportweg des Bügelhakens auf der Kette, stellt sich ein verengender Spalt ein, durch den der Bügelhaken mit Nachdruck vom Förderer abgegeben wird.

Anhand einer Zeichnung soll die Erfindung nachfolgend näher erläutert werden.

Es zeigt:
- Figur 1: einen zur Transportrichtung senkrecht verlaufenden Schnitt durch den Förderer,
- Figur 2: die Seitenansicht des Förderers im Teilschnitt,

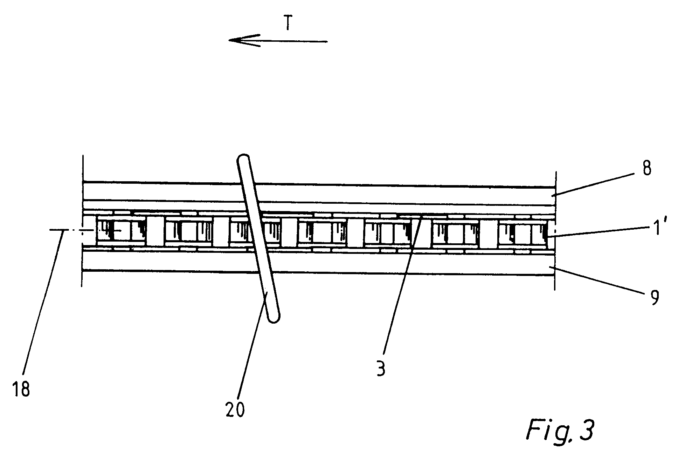

- Figur 3: eine Teildraufsicht auf den Förderer.

Der Förderer besteht im wesentlichen aus dem die Führung der Kette 1 übernehmenden Profil 7, mit den beiden Profilhälften 7a, 7b. Die Kette 1 ist eine handelsübliche Rollenkette. Einzelne Kettenglieder 2 weisen senkrecht zur Transportrichtung T über die Kette 1 hinausragende Mitnehmer 3 auf. Diese Mitnehmer 3 haben eine dreieckförmige Form und ihre zum Transport der Bügelhaken 20 dienende vordere Kante 3' verläuft senkrecht zur Transportrichtung T. Die Transportrichtung T wird definiert durch die Umlaufrichtung der Kette 1.

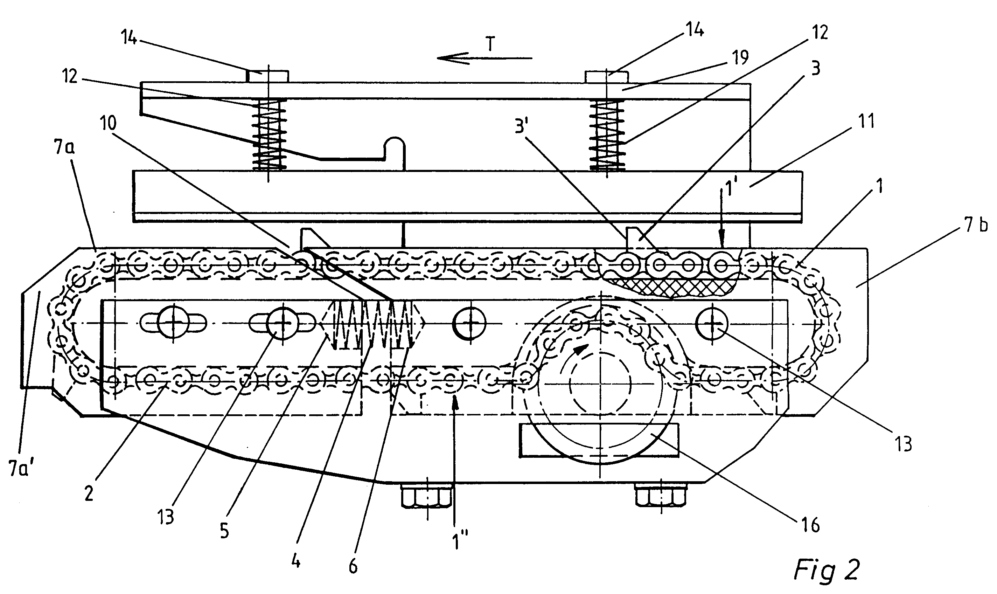

Angetrieben wird die Kette 1 durch einen Antriebsmotor 15, der über eine Antriebswelle 17 auf das Antriebsritzel 16 wirkt, das in der (in Figur 2 rechten) Profilhälfte 7b so angeordnet ist, daß das untere Trum 1'' der Kette 1 darüber hinweggeführt ist. Das Profil 7 weist mittig in seiner Längserstreckung eine umlaufende Ausfräsung auf, in der die Führung der Kette 1 erfolgt. Die Umlenkung der Kette 1 wird ebenfalls direkt durch die in dem Profil 7 vorgesehene Ausfräsung vorgenommen.

Das Profil 7 ist durch eine bezogen auf seine Längsrichtung senkrechte Teilungsfuge 10 in eine vordere und eine hintere Profilhälfte 7a, 7b unterteilt.

Figur 2 zeigt, daß die beiden Profilhälften 7a, 7b in ihrem inneren Zentrum je eine Ausnehmung 5, 6, die, wie hier dargestellt, durch ein Sackloch gebildet wird, aufweisen. Diese beiden Ausnehmungen 5, 6 liegen sich im zusammengebauten Zustand des Profils 7 gegenüber und tragen eine Druckfeder 4, die sich mit ihren beiden Enden jeweils in einer Profilhälte abstützt. Durch diese Druckfeder 4 werden die beiden Profilhälften 7a, 7b entlang geeigneter, hier nicht näher dargestellter Führungen auseinandergedrückt. Hierdurch wird eine absolute Spannung der Kette 1 bewirkt, die folglich immer spielfrei angetrieben wird.

Die Mitnehmer 3 sind in regelmäßigen Abständen über die Kettenglieder 2 der Kette 1 verteilt. Hierdurch wird ein definierter Abstand der zu transportierenden Bügel 21 und eine Synchronisation der Bügel 21 dann erreicht, wenn beispielsweise eine Weitergabe in einen anderen Förderer, beispielsweise die Taschen eines Schnellförderers, bei dem für jeden Bügel immer nur eine Fördertasche vorgesehen ist, erfolgen soll.

Die dreieckförmigen Mitnehmer 3 sind in Bezug auf die Längsachse 18 der Förderkette 1 außermittig in Richtung des Antriebsmotors 15 angeordnet. Hierdurch wird bewirkt, daß die auf den Bügelhaken 20 einwirkende Transportkraft nicht zentrisch angreift und sich der Bügelhaken 20 beim Transport querstellt, wodurch eine bessere Transportstabilität erreicht wird.

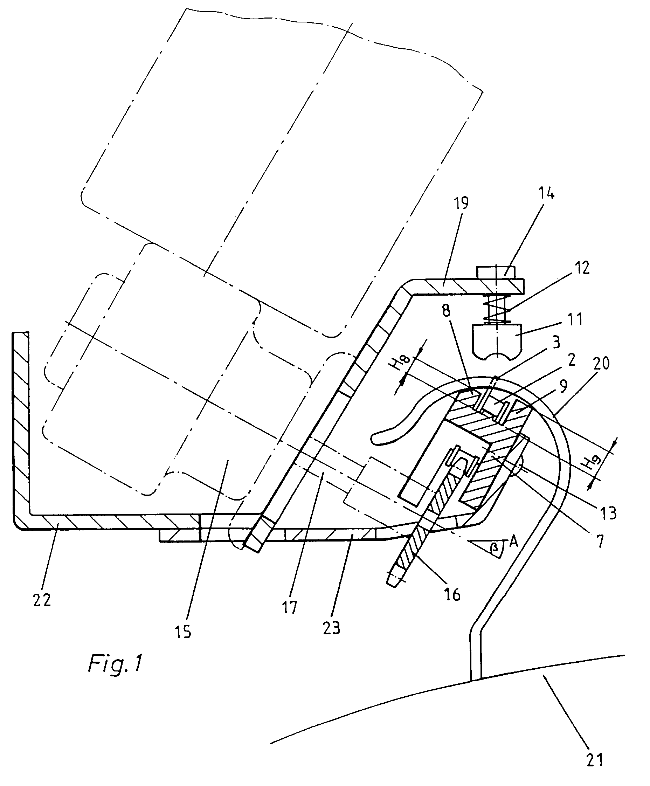

Wie Figur 1 zeigt, ist die Kette 1 gegenüber einer senkrecht zur Transportrichtung T verlaufenden Horizontalen A um den Winkel β geneigt angeordnet. Der Neigungswinkel β ist vorzugsweise so gewählt, daß der Förderer, d.h. insbesondere das Antriebsritzel 16 und die Kette 1 parallel zu der Schrägung des Hakens 20 verläuft. Hierbei wird deutlich, daß zwischen dem Antriebsritzel 16 und dem Bügel 21 ein maximaler Abstand verbleibt, so daß auch Bügelhaken mit einer kurzen Höhe problemlos gefördert werden können.

An seiner Oberseite weist das Profil 7 beidseitig zur Kette 1 einen parallel hierzu verlaufenden Schenkel 8 und 9 auf. Die Schenkel 8, 9 dienen zur Auflage und Führung des Hakens 20. Hierzu ist die Höhe H₉ des Schenkels 9, der dem Inneren des Hakens 20 näher liegt, größer als die Höhe H₈ des Schenkels 8, der in Richtung der Spitze des Hakens 20 weist. Der Unterschied zwischen der Höhe H₈ und H₉ ist so gewählt, daß der Bügel 21 bzw. der Haken 20 trotz der Schrägstellung des Förderers in einer horizontalen Ebene geführt wird.

Der Förderer ist an winklig gebogenen Blechen 22, 23 befestigt und in hier nicht näher dargestellter Weise in eine Förderanlage integriert, beispielsweise an dem Hauptförderstrang der Förderanlage befestigt. Die Befestigung des Profils 7 an dem Blech 23 erfolgt über mehrere Schrauben 13. Zur Einstellung der Kettenspannung ist die vordere Profilhälfte 7a in im Blech 23 vorgesehenen - hier nicht nähere bezeichneten - Langlöchern angeordnet. Über ein Schutzblech 19, das zwischen dem Förderer und dem Antriebsmotor 5 verläuft, ist oberhalb der Förderkette eine Schutzleiste 11 angeordnet. Die Schutzleiste ist an dem Schutzblech 19 über mehrere Bolzen 14 und eine sich an der Innenseite der Schutzleiste 11 und dem Schutzblech 19 abstützenden Druckfeder in vertikaler Richtung beweglich gelagert. Durch die Schutzleiste 11 wird eine Verletzung des Bedien- oder Wartungspersonals bei laufendem Förderer vermieden. Die vertikale Bewegbarkeit der Schutzleiste 11 gewährleistet, daß ein Bügelhaken auf einfache Art und Weise aus dem Förderer herausgenommen werden oder im Bedarfsfall auch in den Förderer eingehängt werden kann.

Das Profil 7 ist vorzugsweise aus Kunststoff hergestellt, der gegenüber der Kette 1 selbstschmierende Eigenschaften aufweist. Hierdurch wird einmal nur ein geringer Schmierfilm benötigt, so daß ein Verschmutzen der transportierten Kleidungsstücke wirksam ausgeschlossen wird, zum anderen werden die Notlaufeigenschaften erhöht.

## Patentansprüche

1. Förderer, insbesondere Stetigförderer für auf mit Haken (20) versehenen Bügeln (21) hängende Kleidungsstücke, mit einer umlaufend angetriebenen, die Bügel (21) an den Haken (20) transportierenden Kette (1), **dadurch gekennzeichnet**, daß die Kette (1) gegenüber einer senkrecht zur Transportrichtung (T) verlaufenden Horizontalen (A) um einen Winkel (β) geneigt ist und einzelne Kettenglieder (2) dreieckförmige, nach oben über die Kette (1) hinausragende Mitnehmer (3) aufweisen.

2. Förderer nach Anspruch 1, **dadurch gekennzeichnet**, daß die in Transportrichtung (T) gesehene vordere Kante (3') der Mitnehmer (3) senkrecht zur Transportrichtung (T) verläuft.

3. Förderer nach Anspruch 1 oder 2, **dadurch gekennzeichnet**, daß die Mitnehmer (3) bezogen auf die Längsachse (18) der Kette (1) außermittig angeordnet sind.

4. Förderer nach einem oder mehreren der vorstehenden Ansprüche, **dadurch gekennzeichnet**, daß die Kette (1) in einem quergeteilten Profil (7) geführt läuft und die durch die Teilungsfuge (10) gebildeten auf die Transportrichtung (T) bezogenen vorderen (7a) und hinteren Profilhäften (7b) je eine Ausnehmung (Sacklöcher 5, 6) aufweisen, wobei sich die Öffnungen in Einbaulage der Profilhälften (7a, 7b) gegenüberliegen und gemeinsam eine Druckfeder (4) aufnehmen.

5. Förderer nach Anspruch 4, **dadurch gekennzeichnet**, daß das Profil (7) parallel zur Kette (1) verlaufende, sich in Richtung des Hakens (20) erstreckende Schenkel (8, 9) aufweist, deren Höhe (H₈, H₉) unterschiedlich ist.

6. Förderer nach Anspruch 5, **dadurch gekennzeichnet**, daß die Schenkel (8, 9) an dem vorderen Ende (7a') des Profils (7) nach unten abgeschrägt verlaufen.

7. Förderer nach einem oder mehreren der vorstehenden Ansprüche, **dadurch gekennzeichnet**, daß über dem oberen Trum (1') der Kette (1) eine horizontal verlaufende, sich in Transportrichtung (T) über annähernd die volle Länge des Trums (1') erstreckende Schutzleiste (11) angeordnet ist.

8. Förderer nach Anspruch 7, **dadurch gekennzeichnet**, daß die Schutzleiste (11) in vertikaler Richtung gegen die Kraft mindestens einer Feder (12) verschiebbar ist.

9. Förderer nach Anspruch 5, **dadurch gekennzeichnet**, daß die Schenkel (8, 9) zur Führung des Hakens (20) dienen.

10. Förderer nach Anspruch 4, **dadurch gekennzeichnet**, daß die Umlenkung der Trümer (1', 1'') der Kette (1) und die Führung der Kette (1) bei der Umlenkung direkt durch das Profil (7) erfolgt.

## Claims

1. A conveyor, especially a continuous conveyor for articles of clothing hanging on hangers (21) provided with hooks (20), with a circulatorily driven chain (1) which transports the hangers (21) by their hooks (20), characterised in that the chain (1) is inclined at an angle (β) to the horizontal (A) extending orthogonally to the direction of transport (T) and that individual chain links (2) are provided with three-sided drive portions (3) which project upwardly beyond the chain (1).

2. A conveyor according to claim 1, characterised in that the leading edge (3') of the drive portion (3) viewed in the direction of transport (T) extends orthogonally to the direction of transport (T).

3. A conveyor according to claim 1 or 2, characterised in that the drive portions (3) are arranged off-centre with respect to the longitudinal axis (18) of the chain (1).

4. A conveyor according to one or more of the preceding claims, characterised in that the chain runs guided in a transversely-divided section (7) and the - with respect to the direction of transport (T) - anterior (7a) and posterior (7b) section halves formed through the dividing joint (10) are each provided with a recess (blind holes 5, 6), wherein the openings lie opposite each other in the fitted position of the section halves (7a, 7b) and together accommodate a compression spring (4).

5. A conveyor according to claim 4, characterised in that the section (7) is provided with limbs (8, 9) which extend parallel to the chain (1) and in the direction of the hook (20) and are of different height (H₈, H₉).

6. A conveyor according to claim 5, characterised in that the limbs (8, 9) slope downwardly at the anterior end (7a') of the section (7).

7. A conveyor according to one or more of the preceding claims, characterised in that a horizontally-extending guard strip (11) is arranged above the upper strand (1') of the chain (1) and runs in the direction of transport (T) for almost the full length of the strand (1').

8. A conveyor according to claim 7, characterised in that the guard strip (11) can be displaced in a vertical direction against the force of at least one spring (12).

9. A conveyor according to claim 5, characterised in that the limbs (8, 9) serve to guide the hook (20).

10. A conveyor according to claim 4, characterised in that the section (7) directly serves to deflect the strands (1', 1'') of the chain (1) and to guide the chain (1) during the deflection process.

## Revendications

1. Transporteur, notamment transporteur continu pour vêtements suspendus sur des cintres (21) munis de crochets (20), comportant une chaîne (1) transportant les cintres (21) avec les crochets (20), entraînée en carrousel,
caractérisé en ce que la chaîne (1) est inclinée d'un angle (β) par rapport à une horizontale (A) perpendiculaire à la direction de transport (T) et des éléments de chaîne individuels (2) présentent des poussoirs (3) triangulaires faisant saillie vers le haut sur la chaîne (1).

2. Transporteur selon la revendication 1,
caractérisé en ce que l'arête avant (3') du poussoir (3) vue dans la direction de transport (T) est perpendiculaire à la direction de transport (T).

3. Transporteur selon la revendication 1 ou 2,
caractérisé en ce que les poussoirs (3) sont décalés par rapport à l'axe longitudinal (18) de la chaîne (1).

4. Transporteur selon une ou plusieurs des revendications précédentes,
caractérisé en ce que la chaîne (1) se déplace guidée dans un profilé (7) divisé transversalement et les moitiés de profilé avant (7a) et arrière (7b) formées par la fente de division (10) par rapport à la direction de transport (T) présentent chacune un creux (trous borgnes 5, 6), les ouvertures en position de montage des moitiés de profil (7a, 7b) étant en face l'une de l'autre et recevant en commun un ressort de pression (4).

5. Transporteur selon la revendication 4,
caractérisé en ce que le profilé (7) présente des ailes (8, 9) se projetant en direction du crochet (20), orientées parallèlement à la chaîne (1), dont la hauteur (H₈, H₉) est différente.

6. Transporteur selon la revendication 5,
caractérisé en ce que les ailes (8, 9) sont chanfreinées vers le bas à l'extrémité avant (7a') du profilé (7).

7. Transporteur selon une ou plusieurs des revendications précédentes,
caractérisé en ce que une bande de protection horizontale (11) est placée au-dessus du passage supérieur (1') de la chaîne (1) en s'étendant dans la direction de transport (T) sur presque toute la longueur du passage (1').

8. Transporteur selon la revendication 7,
caractérisé en ce que la bande de protection (11) peut être translatée verticalement contre la force d'au moins un ressort (12).

9. Transporteur selon la revendication 5,
caractérisé en ce que les ailes (8, 9) servent au guidage du crochet (20).

10. Transporteur selon la revendication 4,
caractérisé en ce que la partie courbe des passages (1', 1'') de la chaîne (1) et le guidage de la chaîne (1) dans la partie courbe se font directement par le profité (7).
